# EUROPEAN PATENT APPLICATION

(11) **EP 4 152 213 A1**
(43) Date of publication of application: **22.03.2023**
(21) Application number: 22194737.7
(22) Date of filing: 09.09.2022
(51) Int. Cl.: G06N 3/04, G06N 3/0495, G06N 3/08, G06N 3/096

(54) **ELECTRONIC DEVICE AND NEURAL NETWORK MODULE FOR PERFORMING NEURAL NETWORK OPERATION BASED ON MODEL METADATA AND CONTROL DATA**

(30) Priority: 16.09.2021 KR 20210124266
(71) Applicant: Samsung Electronics Co., Ltd., Gyeonggi-do, 16677 (KR)
(72) Inventor: YANG, Seungsoo, 16677 Suwon-si, Gyeonggi-do (KR)
(74) Representative: Kuhnen & Wacker Patent- und Rechtsanwaltsbüro PartG mbB

(57) **Abstract**

An electronic device for performing a neural network operation on input data based on a trained learning model includes: a model parser configured to generate model metadata by converting a trained learning model into a layered graph, the layered graph including subgraphs; a control manager configured to generate control data regarding a resource for performing a neural network operation, the resource corresponding to at least one of the subgraphs in the layered graph; and a memory configured to store the model metadata, the control data, and the trained learning model and configured to provide the model metadata and the control data based on a request for an operation of the trained learning model.

## Description

### CROSS-REFERENCE TO RELATED APPLICATION

This application is based on and claims priority under 35 U.S.C. §119 to Korean Patent Application No. 10-2021-0124266, filed on September 16, 2021, in the Korean Intellectual Property Office, the disclosure of which is incorporated by reference herein in its entirety.

### BACKGROUND

The inventive concept relates to a neural network module and electronic device, and more particularly, to an electronic device and a neural network module for performing a neural network operation based on model metadata and control data.

Artificial neural networks (ANNs) exploit computational architectures that model biological brains. Deep learning or machine learning may be implemented based on ANNs. As the amount of computations to be processed using an ANN has dramatically increased in recent years, there is a need for efficiently performing computations by using an ANN.

### SUMMARY

The inventive concept provides a method of reducing a preparation time required to perform a neural network operation by calling a trained learning model.

According to an aspect of the inventive concept, an electronic device for performing a neural network operation on input data based on a trained learning model includes: a model parser configured to generate model metadata by converting a trained learning model into a layered graph, the layered graph including subgraphs; a control manager configured to generate control data regarding a resource for performing a neural network operation, the resource corresponding to at least one of the subgraphs in the layered graph; and a memory configured to store the model metadata, the control data, and the trained learning model and configured to provide the model metadata and the control data based on a request for an operation of the trained learning model.

According to another aspect of the inventive concept, an method of performing a neural network operation includes: generating model metadata by converting a learning model into a layered graph, the layered graph including subgraphs; generating control data regarding a resource for performing a neural network operation, the resource corresponding to at least one of subgraphs in the layered graph; storing the model metadata and the control data in a memory; and reading the model metadata and the control data from the memory based on a request for an operation of the learning model.

According to another aspect of the inventive concept, a neural network module for controlling a neural network operation on input data based on a trained learning model includes: a model parser configured to generate model metadata by converting a trained learning model into a layered graph, the layered graph including subgraphs; a control manager configured to generate, based on the model metadata, control data corresponding to at least one of the subgraphs in the layered graph; and a task manager configured to receive, based on a request for an operation of the trained learning model, the model metadata and the control data from a memory and assign, based on the model metadata and the control data, a hardware block to perform the operation of the trained learning model.

### BRIEF DESCRIPTION OF THE DRAWINGS

Embodiments of the inventive concept will be more clearly understood from the following detailed description taken in conjunction with the accompanying drawings in which:
FIG. 1 is a block diagram of an electronic device according to an embodiment of the inventive concept;
FIG. 2 is a block diagram illustrating a data flow for performing a neural network operation according to a comparative example;
FIG. 3 is a block diagram of a neural network module according to an embodiment of the inventive concept;
FIG. 4 is a block diagram of a neural network manager according to an embodiment of the inventive concept;
FIG. 5 is a diagram illustrating an example in which a neural network model is partitioned into a plurality of subgraphs, according to an embodiment of the inventive concept;
FIG. 6 is a diagram illustrating information input to a control manager and control data generated based on the information, according to an embodiment of the inventive concept;
FIG. 7 is a block diagram of a cryptographic engine that encrypts and decrypts model metadata and control data;
FIG. 8 is a diagram illustrating an example in which generated model metadata and control data are added to and stored in each learning model, according to an embodiment of the inventive concept;
FIG. 9 is a block diagram illustrating a data flow in a neural network system that performs an inference operation, according to an embodiment of the inventive concept;
FIG. 10 is a flowchart of an operation method of a neural network module, according to an embodiment of the inventive concept;
FIG. 11 is a flowchart of a method of performing an operation for a target learning model, according to an embodiment of the inventive concept; and
FIG. 12 is a block diagram of an autonomous driving apparatus for performing a neural network operation, according to an embodiment of the inventive concept.

### DETAILED DESCRIPTION

Hereinafter, embodiments of the inventive concept is described in detail with reference to the accompanying drawings.

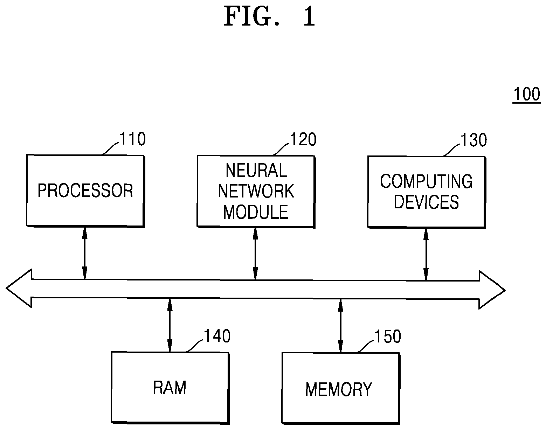

FIG. 1 is a block diagram of an electronic device 100 according to an embodiment of the inventive concept.

The electronic device 100 of FIG. 1 may analyze input data in real-time, based on a neural network, to extract effective information, make decisions about a given situation based on the extracted information, and/or control components mounted on the electronic device 100.

The electronic device 100 of FIG. 1 may be an application processor (AP) included in a mobile device. Alternatively, the electronic device 100 of FIG. 1 may correspond to a computing system, a robot device such as a drone, an advanced driver assistance system (ADAS), etc., a smart TV, a smartphone, a medical device, a mobile device, an image display device, a measurement device, an Internet of Things (IoT) device, or the like. It is hereinafter assumed that the electronic device 100 of FIG. 1 corresponds to an AP.

Referring to FIG. 1, the electronic device 100 may include a processor 110, a neural network module 120, computing devices 130, random access memory (RAM) 140 and a memory 150. In an embodiment, at least some of the components of the electronic device 100 may be mounted on a single semiconductor chip. Each of the processor 110, the neural network module 120, the computing devices 130, the RAM 140, and the memory 150 may transmit and/or receive data via a data bus.

Because the electronic device 100 performs operations of a neural network, the electronic device 100 may be defined as including a neural network system. The neural network system may include at least some of the components included in the electronic device 100 in relation to operations of a neural network. As an example, although FIG. 1 shows that the neural network system includes the processor 110, the neural network module 120, and the computing devices 130, embodiments of the inventive concept are not limited thereto. For example, various other types of components involved in operations of a neural network may be included in the neural network system.

The processor 110 controls operations of the electronic device 100. The processor 110 may include one processor core (a single core) or a plurality of processor cores (multiple cores). The processor 110 may process or execute programs and/or data stored in the memory 150. In an embodiment, the processor 110 may execute programs stored in the memory 150 to control functions of the neural network module 120 and the computing devices 130.

The RAM 140 may temporarily store programs, data, or instructions. For example, programs and/or data stored in the memory 150 may be temporarily stored in the RAM 140 according to control by the processor 110 or booting code. The RAM 140 may be implemented as a memory such as dynamic RAM (DRAM) or static RAM (SRAM).

The memory 150 may store user data, control data, or control command code for controlling the electronic device 100. The memory 150 may include at least one of a volatile memory and a nonvolatile memory. For example, the memory 150 may be implemented as DRAM, SRAM, embedded DRAM, etc.

According to an embodiment of the inventive concept, the memory 150 may store, together with a learning model, model metadata and control data corresponding to the learning model. The model metadata may include information layered in a form of a graph as a result of parsing the learning model, and the control data may include control information of hardware blocks corresponding to the layered information.

The neural network module 120 may perform neural network-based tasks based on various types of neural networks. Operations required in a neural network may be executed by the computing devices 130. The neural network module 120 may generate an information signal as a result of the execution. The information signal may include one of various types of recognition signals such as a voice recognition signal, an object recognition signal, an image recognition signal, a biometric information recognition signal, etc. In the inventive concept, the neural network module 120 may also be referred to as an artificial neural network (ANN) module.

The neural network may include various types of neural network models such as convolution neural networks (CNNs) such as GoogLeNet, AlexNet, a Visual Geometry Group (VGG) network, etc., a region with CNN (R-CNN), a region proposal network (RPN), a recurrent neural network (RNN), a stacking-based deep neural network (S-DNN), a state-space dynamic neural network (S-SDNN), a deconvolution network, a deep belief network (DBN), a restricted Boltzmann machine (RBM), a fully convolutional network (FCN), a long short-term memory (LSTM) network, a classification network, etc., but is not limited thereto. In addition, a neural network that performs one task may include sub-neural networks, and the sub-neural networks may be implemented as heterogeneous neural network models.

Moreover, the electronic device 100 may execute various types of applications, and the applications may request the neural network module 120 to perform tasks based on homogeneous or heterogeneous neural networks. In this case, when heterogeneous neural networks for performing tasks each include the same sub-neural network (i.e., the same neural network model) or the same operation group, the neural network module 120 may set the sub-neural network or the operation group to be run on the same computing device in a single process during execution of the heterogeneous neural networks.

According to an embodiment of the inventive concept, the neural network module 120 may generate model metadata by parsing a learning model, and generate layered control data based on the model metadata. The model metadata and the control data may be both layered information, and an order in which neural network operations are to be performed may be recorded on the model metadata and the control data. The neural network module 120 may store, in the memory 150, the model metadata and the control data together with the learning model.

In response to a request for operations of a learning model from the processor 110, the neural network module 120 may receive model metadata and control data as well as the learning model from the memory 150. The neural network module 120 may control neural network operations by transmitting assignment information to the computing devices 130, based on the model metadata and control data.

The neural network module 120 may be implemented in various forms, and according to an embodiment, the neural network module 120 may be implemented in the form of software. However, embodiments of the inventive concept are not limited thereto, and the neural network module 120 may be implemented in the form of hardware (or hardware block) or as a combination of hardware and software (or software block). In an embodiment, the neural network module 120 may be implemented in the form of software in an operating system (OS) or a lower level thereof, and also be implemented as programs loadable into the memory 150.

Each of the computing devices 130 may execute operations on received input data according to control by the neural network module 120. The computing devices 130 may include a processor, such as a central processing unit (CPU), a graphics processing unit (GPU), a neural processing unit (NPU), a digital signal processor (DSP), a field programmable gate array (FPGA), an electronic control unit (ECU), etc. Furthermore, the computing devices 130 may include a separate memory (not shown) for storing a result of the operations of the computing devices. One of a plurality of hardware devices included in the computing devices 130 may execute a merged operation group.

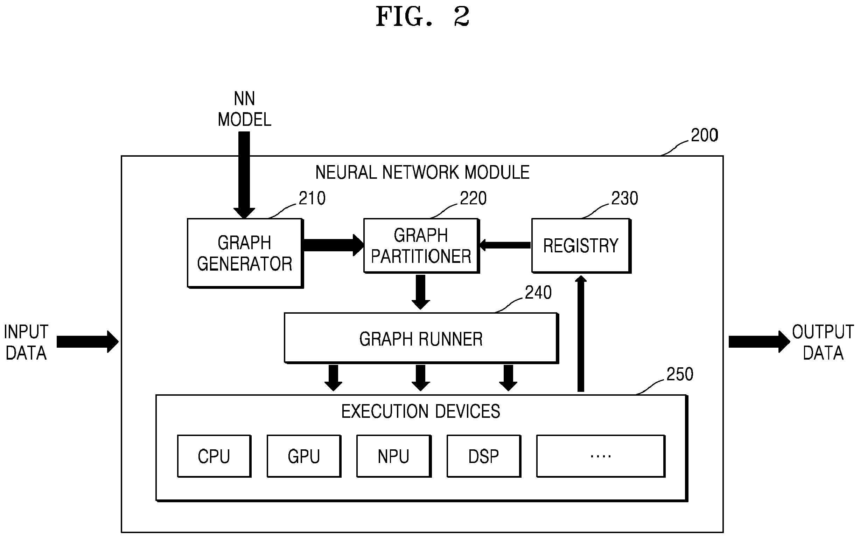

FIG. 2 is a block diagram illustrating a data flow for performing a neural network operation according to a comparative example.

Referring to FIG. 2, when an electronic device receives a request for a neural network operation on input data, the electronic device may receive a neural network model which is to perform the neural network operation. For example, the neural network model may be a pre-trained learning model.

A graph generator 210 of a neural network module 200 may generate a layered graph based on the neural network model. By parsing the neural network model, the graph generator 210 may generate a graph including a plurality of layers and defining a connection relationship between the plurality of layers. A graph partitioner 220 of the neural network module may partition the layered graph into a plurality of subgraphs according to operation characteristics. In this case, the graph partitioner 220 may receive information such as hardware, OS software, user preference, etc. from a registry 230, and partition the layered graph into subgraphs based on the received information.

A graph runner 240 of the neural network module 200 may generate command signals so that neural network operations are performed in units of the subgraphs. The graph runner 240 provides the command signals to a plurality of execution devices 250, so that the plurality of execution devices 250 may perform the neural network operations.

As described above, the neural network module 200 is required to analyze a learning model for a long time before performing neural network operations in the process of generating output data based on one piece of input data. For example, when it takes 400 ms for the electronic device to generate output data based on input data, the time taken for an inference operation may be 250 ms, and the time taken to prepare the inference operation may be 150 ms.

However, the neural network module 120 of FIG. 1 may pre-analyze a neural network model and store model metadata and control data corresponding to the neural network model in the memory 150, thereby reducing the time taken until an inference operation is performed.

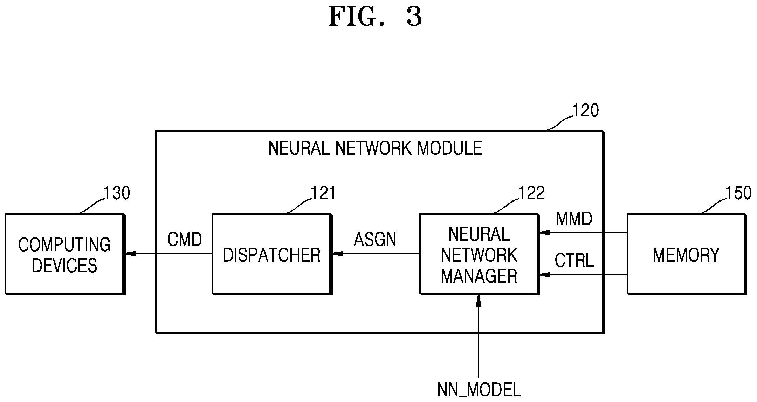

FIG. 3 is a block diagram of a neural network module 120 according to an embodiment of the inventive concept.

Referring to FIG. 3, the neural network module 120 may include a dispatcher 121 and a neural network manager 122. The neural network manager 122 may generate model metadata by parsing a neural network model and generate control data based on the model metadata during an inference preparation process. The neural network module 120 may store the generated model metadata and control data in a memory 150.

Thereafter, during an inference process, the neural network module 120 may assign hardware blocks required for neural network operations based on the model metadata and the control data stored in the memory 150, and provide commands to the assigned hardware blocks.

According to the inventive concept, the neural network module 120 may perform inference operations a plurality of times after updating the model metadata and the control data once. In other words, because the electronic device 100 may perform an inference operation based on the model metadata and the control data by omitting an inference preparation process, the time required to perform an operation of a neural network may be reduced.

The neural network manager 122 included in the neural network module 120 may receive a neural network model for which model metadata and control data are to be generated. The neural network manager 122 may receive the neural network model as a model file or in the form of a model buffer.

The neural network manager 122 may parse the received neural network model and generate model metadata analyzed in the form of a layered graph. The neural network manager 122 may generate control data corresponding to the layered graph based on the model metadata. According to an embodiment, model metadata and control data generated based on the same neural network model may be configured in the same layered format.

The neural network manager 122 may store the generated model metadata and control data in the memory 150. In this case, the neural network manager 122 may store the model metadata and the control data together with the received neural network model. Thus, based on receiving an inference request for a neural network model, the neural network manager 122 may request the memory 150 for model metadata and control data mapped to the neural network model.

When a request for an operation of the neural network model is received during the inference process, the neural network manager 122 may receive the model metadata and the control data from the memory 150. The neural network module 120 may omit analysis of the corresponding neural network model and complete preparation for neural network operations once the model metadata and the control data are received from the memory 150.'

The neural network manager 122 may generate assignment information based on the model metadata and the control data and provide the assignment information to the dispatcher 121. The assignment information may be information about assigning hardware for performing a neural network operation, which corresponds to a subgraph of the layered graph, and include a hardware type and driving level information. The driving level information may be generated in correspondence to each hardware.

The dispatcher 121 may receive assignment information from the neural network manager 122 and provide a command signal to each of the computing devices 130 based on the received assignment information. The command signal may include information about whether each of the computing devices 130 is activated or driving level information.

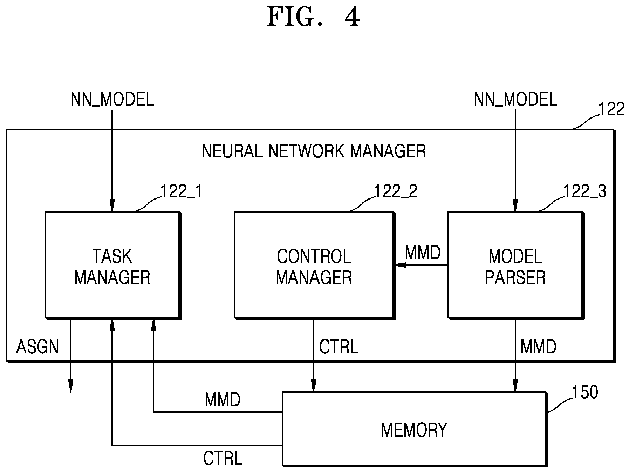

FIG. 4 is a block diagram of the neural network manager 122 according to an embodiment.

Referring to FIG. 4, the neural network manager 122 according to the embodiment may include a task manager 122_1, a control manager 122_2, and a model parser 122_3. Although the task manager 122_1, the control manager 122_2, and the model parser 122 3 may be implemented in different chips for operation, embodiments of the inventive concept are not limited thereto, and some or all of the task manager 122_1, the control manager 122 2, and the model parser 122_3 may be implemented in a single chip and configured to perform different operations.

The model parser 122_3 may receive a neural network model to be analyzed and generate model metadata MMD by parsing the neural network model. Parsing is an operation of analyzing a structure of a neural network model, and may be used to build an internal data structure and perform a grammar check. Accordingly, the model parser 122_3 may generate a layered graph, and the layered graph may include a plurality of subgraphs organically connected to one another.

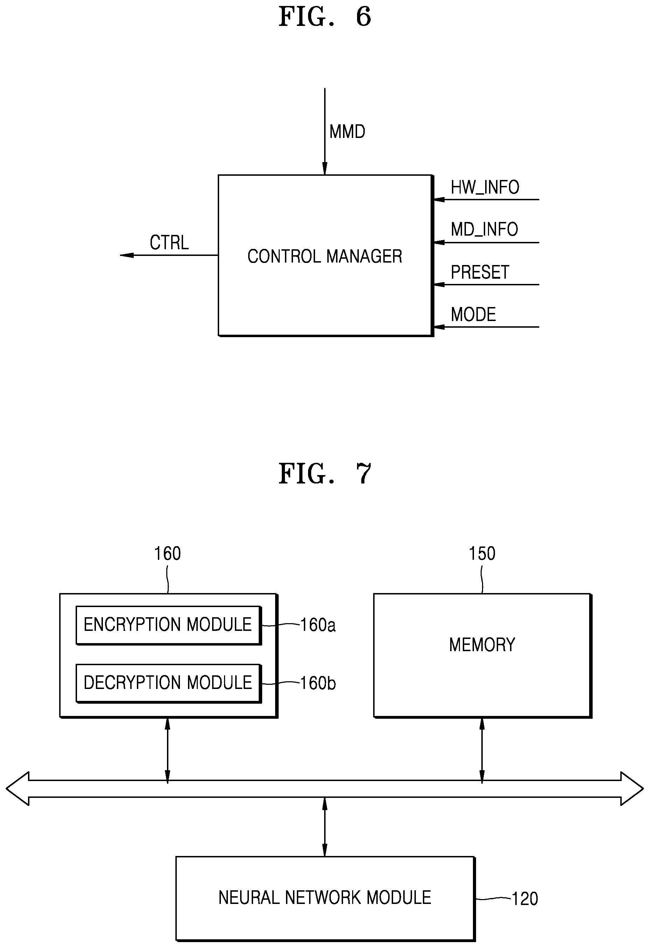

The control manager 122_2 may receive model metadata MMD and generate control data CTRL corresponding to the model metadata MMD. The control manager 122_2 may further receive hardware information, model information, preset information, and mode information, and generate the control data CTRL based thereon. A method, performed by the control manager 122_2, of generating the control data CTRL is described below in detail with reference to FIG. 6.

The model parser 122_3and the control manager 122_2 may respectively generate the model metadata MMD and the control data CTRL, and provide them to the memory 150. The memory 150 may store the model metadata MMD and the control data CTRL by mapping them to the neural network model. After storing the model metadata MMD and the control data CTRL in the memory 150, the neural network manager 122 may generate an update completion event. The neural network manager 122 may output an update completion event using a method such as a callback function, a return value, an output flag, etc.

After storing model metadata MMD and control data CTRL corresponding to a neural network model in the memory 150, the neural network manager 122 may receive a request for a neural network operation for the neural network model from the processor 110. The task manager 122_1 may receive, from the memory 150, model metadata MMD and control data CTRL corresponding to the requested neural network operation.

The task manager 122_1 may output assignment information ASGN corresponding to the model metadata MMD and the control data CTRL. For example, the task manager 122_1 may assign hardware for each operation based on the model metadata MMD and the control data CTRL, and output assignment information ASGN so that the assigned hardware may process the neural network operation.

In other words, the neural network manager 122 of FIG. 4 may store, in the memory 150, model metadata MMD and control data CTRL respectively generated by the model parser 122_3and the control manager 122_2 during an inference preparation process of a certain neural network model, and the task manager 122_1 may receive the model metadata MMD and the control data CTRL of the certain neural network model from the memory 150 and provide assignment information ASGN to the dispatcher 121 during an inference process of the certain neural network model.

Hereinafter, the inventive concept is described with reference to the embodiments of FIGS. 3 and 4.

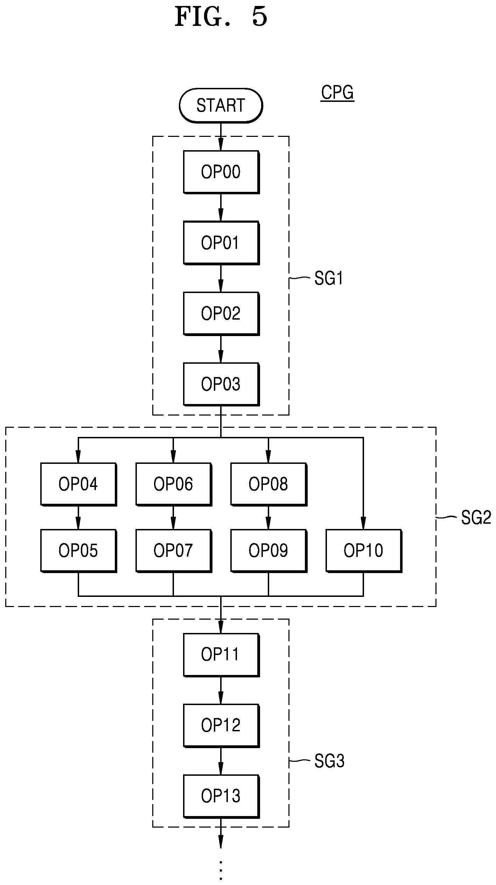

FIG. 5 is a diagram illustrating an example in which a neural network model is partitioned into a plurality of subgraphs, according to an embodiment.

Referring to FIG. 5, the neural network module 120 may generate a computation processing graph CPG including first through fourteenth operations OP00 through OP13 by parsing a neural network model. The first through fourteenth operations OP00 through OP13 may respectively represent various mathematical operations (e.g., a convolution operation, a rectified linear unit (ReLU) operation, a memory copy operation, etc.), and some or all of the first through fourteenth operations OP00 through OP13 may be the same as or different from each other.

The neural network module 120 may classify the generated computation processing graph CPG into a plurality of subgraphs SG1, SG2, and SG3 based on an operation type, operation preference, a graph shape, etc. In the example of FIG. 5, the neural network module 120 may group the first through fourth operations OP00 through OP03 into a first subgraph SG1, the fifth through eleventh operations OP04 through OP10 into a second subgraph SG2, and the twelfth through fourteenth operations OP11 through OP13 into a third subgraph SG3.

The control manager 122_2 may receive the computation processing graph CPG including the first through third subgraphs SG1 through SG3, and output control data CTRL corresponding to the first through third subgraphs SG1 through SG3. In an embodiment, the control manager 122_2 may generate the control data CTRL so that the first through third subgraphs SG1 through SG3 may be respectively assigned to appropriate resources based on capabilities of a plurality of hardware blocks.

The task manager 122_1 may assign hardware for each operation, based on the control data CTRL. For example, the task manager 122_1 may assign the first through fourth operations OP00 through OP03 in the first subgraph SG1 and the twelfth through fourteenth operations OP11 through OP13 in the third subgraph SG3 to first hardware (e.g., an NPU), while assigning the fifth through eleventh operations OP04 through OP10 in the second subgraph SG2 to second hardware (e.g., a GPU). As another example, the task manager 122_1 may assign the first through fourth operations OP00 through OP03 in the first subgraph SG1 to first hardware (e.g., an NPU), the fifth through eleventh operations OP04 through OP10 in the second subgraph SG2 to second hardware (e.g., a GPU), and the twelfth through fourteenth operations OP11 through OP13 in the third subgraph SG3 to third hardware (e.g., a CPU). According to an embodiment of the inventive concept, the control manager 122_2 is not limited thereto, and for example, may assign a plurality of hardware blocks to one subgraph.

FIG. 6 is a diagram illustrating information input to the control manager 122_2 and control data CTRL generated based on the information, according to an embodiment of the inventive concept.

Referring to FIG. 6, according to an embodiment, the control manager 122_2 may generate control data CTRL based on hardware information HW_INFO, model information MD_INFO, preset information PRESET, and mode information MODE. In an embodiment, the hardware information HW_INFO, the model information MD_INFO, the preset information PRESET, and the mode information MODE may be information generated by an external device. However, the control manager 122_2of the inventive concept is not limited thereto and may generate the hardware information HW_INFO, the model information MD_INFO, the preset information PRESET, and the mode information MODE based on information included in the model metadata MMD.

The hardware information HW_INFO may be information about computing hardware and input/output (I/O) hardware assigned as available hardware in the electronic device 100. In addition, the hardware information HW_INFO may include temperature information and system information of each hardware. According to an embodiment, the hardware information HW_INFO may be information about preprocessing and postprocessing operations that are to be performed by each computing hardware. For example, hardware information HW_INFO may indicate that an NPU is capable of performing preprocessing and postprocessing operations such as normalization, quantization, transpose, and dequantization.

The model information MD_INFO may be information related to a parsed neural network model. For example, the model information MD INFO may include information related to a preprocessing or postprocessing operation required to perform an inference operation of a neural network model. In addition, the model information MD_INFO may include information about interworking (or control of interworking) between heterogeneous hardware blocks. The information about interworking between heterogeneous hardware blocks may be information generated by analyzing a neural network model.

The preset information PRESET may be information related to state required to perform a neural network operation or information about requirements for setting hardware to a state suitable for performing the neural network operation. For example, the preset information PRESET may include dynamic voltage frequency scaling (DVFS) level information, last level cache information, and data transmission bandwidth information.

The mode information MODE may be information related to user preference, and may include, for example, information indicating that hardware is set to one of a power saving mode and a boost mode.

The control manager 122_2 may generate the control data CTRL to correspond to a shape of a graph included in the model metadata MMD. According to an embodiment, the control manager 122_2 may generate the control data CTRL in units of subgraphs into which a layered graph is divided.

FIG. 7 is a block diagram of a cryptographic engine 160 that encrypts and decrypts model metadata MMD and control data CTRL.

Referring to FIG. 7, the cryptographic engine 160 may receive model metadata MMD and control data CTRL from the neural network module 120 and encrypt and decrypt the model metadata MMD and the control data CTRL by using an advanced encryption standard (AES) algorithm, and include an encryption module 160a and a decryption module 160b. Although FIG. 7 shows the encryption module 160a and the decryption module 160b implemented as separate modules, unlike in FIG. 7, a single module capable of performing both encryption and decryption may be implemented in the cryptographic engine 160.

According to an embodiment, the cryptographic engine 160 may receive model metadata MMD and control data CTRL from the neural network module 120, perform encryption using an encryption key, and store encrypted model metadata MMD and control data CTRL in the memory 150. The cryptographic engine 160 may decrypt data received from the memory 150 with an encryption key so that the decrypted model metadata MMD and control data CTRL may be provided to the neural network module 120.

In addition, when receiving a request for model metadata MMD and control data CTRL from the neural network module 120, the cryptographic engine 160 may receive the encrypted model metadata MMD and control data CTRL from the memory 150. The decryption module 160b may decrypt data received from the memory 150 by using the same encryption key as that used to encrypt the data.

According to an embodiment, the electronic device 100 may further include a compression engine that may compress model metadata MMD and control data CTRL and store, in the memory 150, the compressed model metadata MMD and control data CTRL together with the neural network model.

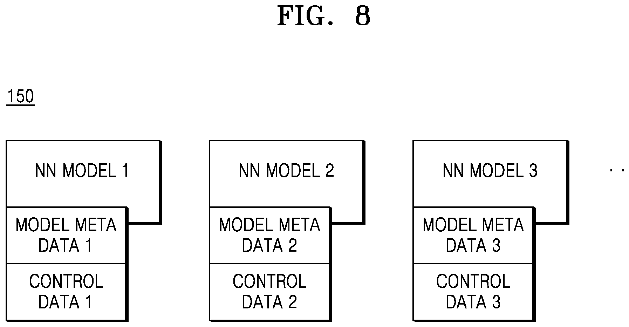

FIG. 8 is a diagram illustrating an example in which generated model metadata MMD and control data CTRL are added to and stored in each learning model, according to an embodiment of the inventive concept.

Referring to FIG. 8, the memory 150 may respectively receive model metadata MMD and control data CTRL from the model parser 122_3 and the control manager 122_2, and store the model metadata MMD and the control data CTRL by mapping them to the neural network model.

According to an embodiment, the memory 150 may assign a target neural network model and model metadata MMD and control data CTRL corresponding to the target neural network model to consecutive addresses, and manage the addresses mapped to the neural network model as a lookup table.

For example, the memory 150 may store a first neural network model, first model metadata MMD, and first control data CTRL in a first region thereof, store a second neural network model, second model metadata MMD, and second control data CTRL in a second region thereof, and store a third neural network model, third model metadata MMD, and third control data CTRL in a third region thereof.

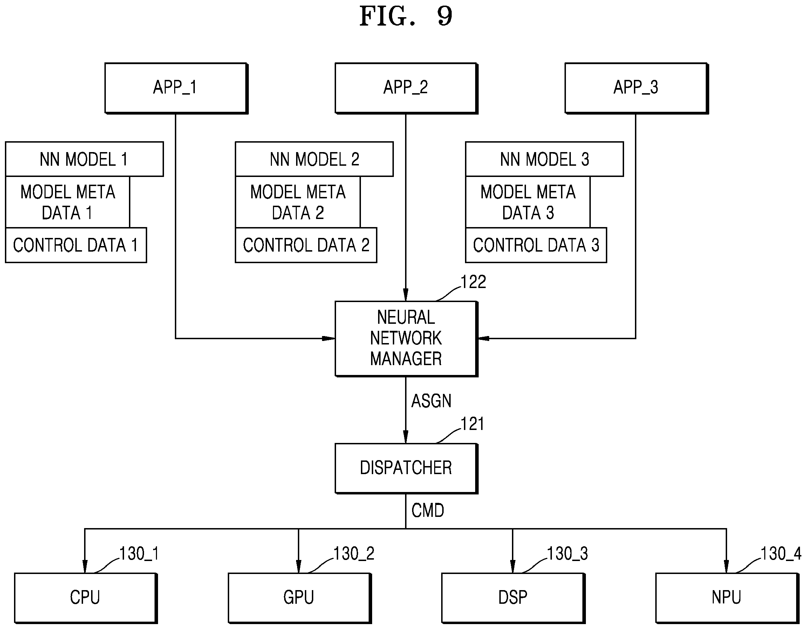

FIG. 9 is a block diagram illustrating a data flow in a neural network system that performs an inference operation, according to an embodiment of the inventive concept.

While FIG. 9 shows three applications APP_1, APP_2, APP_3, this is merely for convenience of description, and the inventive concept is not limited to the illustrated number of applications.

Referring to FIG. 9, first through third applications APP_1 through APP 3 may respectively transmit first through third neural network models, i.e., NN model 1 through NN model 3, to the neural network manager 122 in order to perform their programmed instructions using the NN model 1 through NN model 3. In this case, the memory 150 of the inventive concept may provide model metadata MMD and control data CTRL stored corresponding to each neural network model to the neural network manager 122. For example, when the neural network module 120 receives a request for computation processing programmed in the first application APP_1, the memory 150 may transmit the NN model 1, first model metadata MMD, and first control data CTRL to the neural network manager 122. Similarly, when the neural network module 120 receives a request for computation processing programmed in the second application APP 2, the memory 150 may transmit the NN model 2, second model metadata MMD, and second control data CTRL to the neural network manager 122, and when the neural network module 120 receives a request for computation processing programmed in the third application APP 3, the memory 150 may transmit the NN model 3, third model metadata MMD, and third control data CTRL to the neural network manager 122.

The neural network manager 122 may obtain information of each neural network model by receiving model metadata MMD and control data CTRL corresponding thereto. The neural network manager 122 may obtain model information based on model metadata MMD and control data CTRL, construct a data structure represented as a graph structure, or change a structure to be suitable for processing by heterogeneous hardware. For example, the neural network manager 122 may process a neural network model to have a data structure represented as a graph or subgraph structure suitable for processing by heterogeneous hardware, and provide data regarding a graph or subgraphs to the dispatcher 121. In this case, a graph structure refers to the entire graph structure of a neural network model, and a subgraph structure refers to a data structure constituting at least a part of the graph structure.

The neural network manager 122 may analyze a graph where operations are performed based on model metadata MMD and control data CTRL and control information corresponding to the graph, generate assignment information ASGN so that a plurality of heterogeneous hardware blocks may perform neural network operations, and provide the assignment information ASGN to the dispatcher 121.

The dispatcher 121 may receive the assignment information ASGN from the neural network manager 122 and provide a command signal for requesting hardware blocks to process tasks. For example, the dispatcher 121 may provide a command signal so that at least one of computing hardware blocks, for example, a CPU 130_1, a GPU 130_2, a DSP 130_3, and an NPU 130_4, may perform a neural network operation. Although the computing hardware blocks shown in FIG. 9 are the CPU 130_1, the GPU 130_2, the DSP 130_3, and the NPU 130_4, the types of computing hardware of the inventive concept are not limited thereto.

According to an embodiment of the inventive concept, when the neural network module 120 receives an inference request for at least some of the neural network models, the neural network module 120 may perform an inference operation based on model metadata MMD and control data CTRL that have been obtained by analyzing a corresponding neural network model in advance. In a comparative example, when an inference request is received, it takes a long time to perform an inference operation by analyzing a neural network model and instructing computing hardware blocks to perform neural network operations. Therefore, the comparative example is inefficient to perform computations on only one piece of input data. On the other hand, according to the inventive concept, the neural network module 120 may instruct computing hardware blocks to perform neural network operations based on previously analyzed data, thereby reducing the time required for the inference operation compared to the comparative example.

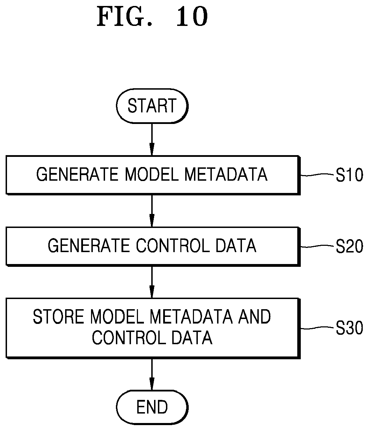

FIG. 10 is a flowchart of an operation method of the neural network module 120, according to an embodiment.

Referring to FIG. 10, according to the inventive concept, the neural network module 120 may generate model metadata MMD and control data CTRL, add the generated model metadata MMD and control data CTRL to a neural network model, and store them in the memory 150.

In operation S10, the neural network module 120 may generate model metadata MMD by parsing the neural network model so that the neural network model is converted into a layered graph. In this case, the generated model metadata MMD may include, for example, graph information, tensor information, weight information, and bias information. The graph information may include layered information of a graph obtained as a result of the parsing the neural network. The tensor information may include size information of input data taken as input to the neural network model, and according to an embodiment, the tension information may include input data size information corresponding to a plurality of subgraphs. The weight information may include information about weights used for a convolution operation between layers in the neural network model. The bias information may represent bias values added to results of a convolution operation of layers in the neural network model.

In operation S20, the neural network module 120 may generate control data CTRL based on the model metadata MMD. The neural network module 120 may use the model metadata MMD to generate pieces of control information corresponding to a graph structure of the neural network model. The neural network module 120 may collect hardware resource information, model information, preset information, and mode information, and generate the control data CTRL based thereon.

In operation S30, the neural network module 120 may store the model metadata MMD and the control data CTRL in the memory 150. After storing the model metadata MMD and the control data CTRL in the memory 150, the neural network module 120 may provide an update completion event to a user. The update completion event notifies the user of completion of an update of the model metadata and the control data in the memory.

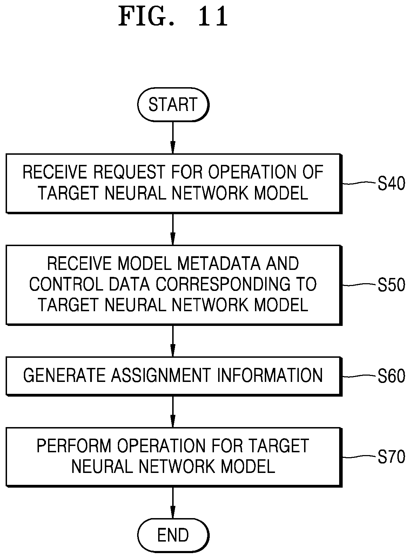

FIG. 11 is a flowchart of a method of performing an operation for a target learning model, according to an embodiment of the inventive concept.

Referring to FIG. 11, after the model metadata MMD and the control data CTRL are stored, the neural network module 120 may perform a neural network operation by providing the metadata MMD and the control data CTRL in response to a request for a target neural network model.

In operation S40, the neural network module 120 may receive a request for an operation of a target neural network model from the processor 110 or a host device. The target neural network model may be one of a plurality of neural network models pre-parsed according to the embodiment of FIG. 10 so that the model metadata MMD and the control data CTRL are stored in the memory 150.

In operation S50, the neural network module 120 may receive, from the memory 150, model metadata MMD and control data CTRL together with the target neural network model.

In operation S60, the neural network module 120 may generate assignment information ASGN based on the model metadata MMD and the control data CTRL. The assignment information ASGN may be information about hardware blocks assigned to perform operations based on the target neural network model.

In operation S70, the neural network module 120 may provide command signals for performing operations to a plurality of computing hardware blocks based on the assignment information ASGN, and the electronic device 100 may perform operations for the target neural network model.

In other words, according to an embodiment of the inventive concept, the neural network module 120 may quickly complete preparation for an inference operation by assigning computing hardware blocks based on data obtained by pre-parsing the neural network model, and thus, the time required to derive output data from input data may be reduced.

Although FIG. 11 illustrates a method of performing an operation using one target neural network model, embodiments of the inventive concept are not limited thereto, and output data may be obtained based on input data by performing operations using a plurality of target neural network models in parallel.

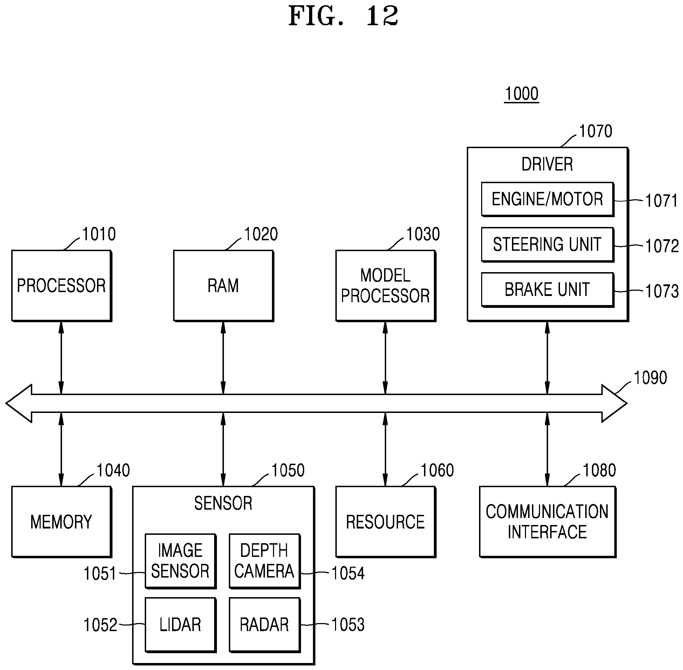

FIG. 12 is a block diagram of an autonomous driving apparatus 1000 for performing a neural network operation according to an embodiment of the inventive concept.

Referring to FIG. 12, the autonomous driving apparatus 1000 may include a processor 1010, RAM 1020, a model processor 1030, a memory 1040, a sensor 1050, a resource 1060, a driver 1070, and a communication interface 1080, and the components of the autonomous driving apparatus 1000 may be connected via a bus 1090 to communicate with one another. In this case, the model processor 1030 may correspond to the neural network module 120 of the above-described embodiments, and the resource 1060 may correspond to the computing devices 130 of the above-described embodiments. In some embodiments, the model processor 1030 and the resource 1060 may be implemented based on the embodiments described above with reference to FIGS. 1 through 11.

The autonomous driving apparatus 1000 may make a decision on a given situation, control a vehicle operation, and perform other operations by analyzing data regarding a surrounding environment of the autonomous driving apparatus 1000 in real-time based on a neural network.

The processor 1010 may control all operations of the autonomous driving apparatus 1000. For example, the processor 1010 may control functions of the model processor 1030 by executing programs stored in the RAM 1020. The RAM 1020 may temporarily store programs, data, applications, or instructions.

The sensor 1050 may include a plurality of sensors for receiving image signals related to the surrounding environment of the autonomous driving apparatus 1000 and output images corresponding to the received image signals. For example, the sensor 1050 may include an image sensor 1051 such as a charge coupled device (CCD) or complementary metal oxide semiconductor (CMOS) sensor, a light detection and ranging (LiDAR) sensor 1052, a radio detecting and ranging (Radar) sensor 1053, a depth camera 1054, etc. Moreover, the inventive concept is not limited thereto, and the sensor 1050 may include an ultrasonic sensor (not shown), an infrared sensor (not shown), etc.

The model processor 1030 may perform a neural network operation by controlling the resource 1060, and generate an information signal based on a result of the performing the neural network operation. The memory 1040 is a storage for storing data, and may store, for example, various types of data generated in the process of performing computations by the model processor 1030 and the resource 1060.

According to an embodiment of the inventive concept, the model processor 1030 may receive captured images of the surrounding environment of the autonomous driving apparatus 1000 from the sensor 1050, and perform neural network operations using the captured images as input data. In this case, the neural network operations may be performed based on model metadata and control data stored in the memory 1040. The model processor 1030 may omit a parsing process on the target neural network model in order to perform operations on the images obtained from the sensor 1050 and receive model metadata and control data from the memory 1040 and perform operations based on the target neural network model by using the model metadata and the control data.

The resource 1060 may include a computation resource for performing a plurality of operations based on a neural network or a communication resource implemented as various wired or wireless interfaces capable of communicating with an external device. According to an embodiment of the inventive concept, the resource 1060 may sequentially perform data processing for a plurality of candidate objects on an object-by-object basis according to an order in which information used for the data processing of the plurality of candidate objects is received from the model processor 1030. According to an embodiment of the inventive concept, the resource 1060 may include a plurality of resources that may be homogenous or heterogeneous resources.

The driver 1070 is a component for driving the autonomous driving apparatus 1000, and may include an engine/motor 1071, a steering unit 1072, and a brake unit 1073. In an embodiment, the driver 1070 may be controlled by the processor 1010 to control propulsion, braking, speed, direction, etc. of the autonomous driving apparatus 1000 via the engine/motor 1071, the steering unit 1072, and the brake unit 1073.

The communication interface 1080 may communicate with an external device using a wired or wireless communication method. For example, the communication interface 1080 may perform communication using a wired communication method such as Ethernet or a wireless communication method such as Wi-Fi, Bluetooth, or the like.

The processor 1010 may generate a control command for controlling the autonomous driving apparatus 1000 by using information generated as the resource 1060 performs data processing. For example, the resource 1060 may recognize obstruction (e.g., a fire) as an object in an image output from the sensor 1050 and generate information about an emergency call number of a corresponding country (e.g., 119 in South Korea or 911 in the USA), as a task corresponding to the recognized obstruction. In addition, the processor 1010 may control the communication interface 1080 to make a call to the emergency phone number 119. As another example, the resource 1060 may recognize an obstruction (e.g., a fire) and perform a task of changing a driving route of the autonomous driving apparatus 1000 as a task corresponding to the obstruction. In addition, the processor 1010 may control the driver 1070 so that the autonomous driving apparatus 1000 travels along the changed driving route.

While the inventive concept has been particularly shown and described with reference to embodiments thereof, it will be understood that various changes in form and details may be made therein without departing from the spirit and scope of the following claims.

## Claims

1. An electronic device for performing a neural network operation on input data based on a trained learning model, the electronic device comprising:
a model parser configured to generate model metadata by converting a trained learning model into a layered graph, the layered graph including subgraphs;
a control manager configured to generate control data regarding a resource for performing a neural network operation, the resource corresponding to at least one of the subgraphs in the layered graph; and
a memory configured to store the model metadata, the control data, and the trained learning model and configured to provide the model metadata and the control data based on a request for an operation of the trained learning model.

2. The electronic device of claim 1, wherein the model metadata comprises at least one of information about the layered graph, tensor information, weight information, or bias information.

3. The electronic device of claim 1, wherein the control manager is further configured to provide an update completion event to a user based on the model metadata and the control data being updated in the memory.

4. The electronic device of claim 1, wherein the control manager is further configured to generate the control data based on at least one of hardware resource information, model information, drive preset information, or mode information.

5. The electronic device of claim 4, wherein the hardware resource information comprises information related to preprocessing and postprocessing on input data, the preprocessing and the postprocessing corresponding to a hardware block assigned for performing the neural network operation.

6. The electronic device of claim 4, wherein the model information comprises at least one of information related to preprocessing on input data corresponding to the trained learning model, information related to postprocessing on the input data corresponding to the trained learning model, and information about interworking between hardware blocks assigned for performing the neural network operation.

7. The electronic device of claim 1, wherein the control manager is further configured to encrypt and compress the model metadata and the control data.

8. The electronic device of claim 1, further comprising a task manager configured to assign a hardware block to perform an operation for each of the subgraphs in the layered graph.

9. The electronic device of claim 1, further comprising a cache memory configured to cache the model metadata and the control data based on the request.

10. The electronic device of claim 1, further comprising a dispatcher configured to instruct a hardware block, which is assigned to a subgraph based on the control data, to perform the operation of the trained learning model.

11. A method of performing a neural network operation, the method comprising:
generating model metadata by converting a learning model into a layered graph, the layered graph including subgraphs;
generating control data regarding a resource for performing a neural network operation, the resource corresponding to at least one of subgraphs in the layered graph;
storing the model metadata and the control data in a memory; and
reading the model metadata and the control data from the memory based on a request for an operation of the learning model.

12. The method of claim 11, wherein the model metadata comprises at least one of information about the layered graph, tensor information, weight information, or bias information.

13. The method of claim 11, further comprising providing an update completion event to a user based on the model metadata and the control data being updated in the memory.

14. The method of claim 11, wherein the generating the control data comprises generating the control data based on at least one of hardware resource information, model information, drive preset information, or mode information.

15. The method of claim 11, further comprising instructing a hardware block, which is assigned to a subgraph based on the control data, to perform the operation of the learning model.
